(19) Europäisches Patentamt

European Patent Office

Office européen des brevets

(11) Numéro de publication : **0 507 658 A1**

## (12) DEMANDE DE BREVET EUROPEEN

(21) Numéro de dépôt : **92400846.9**

(51) Int. Cl.⁵ : **B01J 37/16**

(22) Date de dépôt : **26.03.92**

(30) Priorité : **04.04.91 FR 9104226**

(43) Date de publication de la demande :
**07.10.92 Bulletin 92/41**

(84) Etats contractants désignés :
**AT BE DE GR LU MC NL PT**

(71) Demandeur : **EURECAT EUROPEENNE DE RETRAITEMENT DE CATALYSEURS**
**Quai Jean Jaurès B.P. 45**
**F-07800 La Voulte-sur-Rhône (FR)**

(72) Inventeur : **Berrebi, Georges**
**17, rue Barvnave**
**F-26500 Bourg Les Valence (FR)**
Inventeur : **Rabehasaina, Hans**
**32 Lot Les Bartavelles**
**F-26270 Loriol Sur Drome (FR)**

(74) Mandataire : **Andreeff, François**
**INSTITUT FRANCAIS DU PETROLE 4, avenue de Bois-Préau**
**F-92502 Rueil-Malmaison (FR)**

(54) **Procédé de reduction en milieu organique d'un catalyseur raffinage avant sa mise en oeuvre.**

(57)    L'invention concerne un procédé de réduction d'un catalyseur de raffinage avant sa mise en oeuvre, le catalyseur contenant un support et une phase active à base d'au moins un métal noble ou non noble du groupe VIII ou du groupe Ib de la classification périodique des éléments.
    Le procédé consiste :
    a) à imprégner le catalyseur avec au moins un composé agent réducteur dissous dans un solvant organique et
    b) à décomposer le composé agent réducteur par chauffage du catalyseur.

EP 0 507 658 A1

EP 0 507 658 A1

L'invention concerne un prétraitement des catalyseurs de raffinage ou de pétrochimie qu'ils soient à l'état neuf ou qu'ils proviennent d'une unité de régénération ou d'activation ou de réactivation.

Certains catalyseurs doivent être réduits à l'hydrogène avant d'être utilisés ou réutilisés dans des réactions de conversion d'hydrocarbures, c'est-à-dire, avant d'être mis en contact avec les hydrocarbures ou la charge d'hydrocarbures à traiter. C'est le cas notamment des catalyseurs d'hydrogénation de coupes oléfines en provenance de craquage à la vapeur, des catalyseurs de reformage, d'aromatisation, d'isomérisation ou déshydrogénation de paraffines, etc...

L'invention concerne une méthode particulière de réduction de catalyseurs qui renferment généralement un support et une phase active à base d'au moins un métal du groupe VIII de la classification périodique des éléments, ce métal étant soit un métal noble de la famille du platine (platine, palladium, ruthénium, iridium, rhodium et osmium) soit un métal non noble de ce groupe VIII, à savoir, le fer, le cobalt et le nickel, et/ou à base d'au moins un métal du groupe Ib, à savoir, le cuivre ou l'argent ou l'or. Le support est généralement un oxyde, du type alumine ou silice, ou silice alumine, amorphe ou zéolitique. Ce peut être également un support d'un autre type comme par exemple l'oxyde de titane, l'oxyde de zinc ou une combinaison d'oxydes, ou encore un support de type carbone.

Dans l'art antérieur, de telles réductions sont effectuées en présence d'hydrogène, à une température comprise entre 50 et 500 °C selon les utilisations envisagées pour le catalyseur et selon la nature du catalyseur employé. Pour des catalyseurs au nickel, cobalt ou fer, ces réductions sont effectuées vers 400 °C ; pour des catalyseurs au palladium ou autre métal noble de la famille du platine, ces réductions sont effectuées vers 100 °C ou à plus haute température en fonction du type de support.

Ces réductions qui sont nécessaires à la bonne utilisation des catalyseurs d'hydrogénation sont assez contraignantes pour le raffineur. Elles obligent en effet le raffineur à consommer une quantité non négligeable d'hydrogène ; et surtout ces réactions prennent du temps, car elles durent quelques heures, et elles nécessitent également un temps de refroidissement important du catalyseur puisque les réactions d'hydrogénation proprement dites s'effectuent souvent autour de 20 à 50 °C. Ces problèmes existent depuis des dizaines d'années et les solutions ne sont pas simples ; elles consistent par exemple à utiliser des réacteurs disposés en parallèle, certains de ces réacteurs étant utilisés à toue de rôle pour les réactions d'hydrogénation de la charge et pour la réduction du catalyseur, d'autres étant utilisés, à toue de rôle, pour la réduction du catalyseur et pour les réactions d'hydrogénation de la charge, avec donc des périodes alternatives de mises en attente des réacteurs de réduction du catalyseur, de refroidissement de ce catalyseur et d'hydrogénation catalytique de la charge.

On notera par contre que ce type de problèmes rencontrés ici pour la réduction de catalyseurs d'hydrogénation ne se pose pas pour la réduction des catalyseurs, par exemple, de reformage catalytique ; en effet, les catalyseurs de reformage doivent être réduits vers 400 - 500 °C donc à une température qui est de l'ordre des températures des réactions proprement dites de reforming. Il suffit donc ici de placer le catalyseur dans le réacteur de reformage, d'injecter de l'hydrogène aux conditions opératoires d'un reformage pour activer le catalyseur et d'injecter ensuite la charge d'hydrocarbures à traiter. Toutefois, rien n'interdit au raffineur d'utiliser le procédé selon l'invention, s'il l'estime utile pour quelques raisons que ce soit.

Récemment la demande de brevet du demandeur EP-A-303525 a permis de remédier aux inconvénients précités et d'effectuer une réduction aisée de catalyseurs d'hydrogénation, par un procédé de réduction d'un catalyseur de raffinage renfermant un support et une phase active à base d'au moins un métal du groupe VIII de la classification périodique des éléments caractérisé en ce que, avant la mise en oeuvre de ce catalyseur dans une sone de réaction de raffinage, on réalise un traitement en trois étapes conduites soit "in-situ", c'est-à-dire dans la zone de réaction, ou "ex-situ" c'est-à-dire en dehors de la zone de réaction, le dit traitement étant conduit en 3 étapes consistant :

a) à imprégner le catalyseur entre 0 et 50 °C, avec une solution aqueuse ou organique d'un composé qui est un agent réducteur choisi dans le groupe constitué par les aldéhydes renfermant 2 à 14 atomes de carbone par molécule (et de préférence 3 à 12 atomes de carbone), les cétones ou polycétones renfermant 3 à 18 (et de préférence 3 à 12) atomes de carbone par molécule, les éthers renfermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12 atomes de carbone par molécule), d'hydrazine ou ses dérivés de façon à introduire 10 ppm à 100 % (en poids), de ce composé sur le catalyseur.

b) à élever la température du catalyseur ainsi imprégné à une température comprise entre 100 et 150 °C et sous une pression de 1 à 10 bars.

c) à sécher le catalyseur pour éliminer le solvant d'imprégnation et l'eau formée à l'étape (b).

La présente invention est un perfectionnement de EP-A-303525 et consiste à opérer exclusivement en solution organique en absence d'eau ou de vapeur d'eau. A cet effet, si une opération de strippage est nécessaire, elle sera effectuée sous atmosphère inerte, par exemple sous azote, et non pas sous vapeur d'eau ou sous

2

atmosphère d'oxygène moléculaire.

Le procédé de l'invention consiste à effectuer la réduction du catalyseur (soit en dehors du réacteur de raffinage, c'est-à-dire, "ex-situ", soit dans le réacteur de raffinage, c'est-à-dire, "in-situ") en deux étapes :

a) on imprègne le catalyseur entre 0 et 50 °C, de préférence entre 0 et 40 °C et plus particulièrement entre 10 et 30 °C ou à la température ambiante, par un solvant organique renfermant au moins un agent réducteur choisi dans le groupe constitué par les aldéhydes renfermant 2 à 14 atomes de carbone par molécule (et de préférence 3 à 12 atomes de carbone), les cétones ou polycétones renfermant 3 à 18 (et de préférence 3 à 12) atomes de carbone par molécule, les éthers renfermant 2 à 14 (de préférence 3 à 12) atomes de carbone par molécule, les esters des acides organiques ou polyacides renfermant 1 à 14 (et de préférence 1 à 12 atomes de carbone par molécule), de façon à introduire 10 ppm à 100 % (en poids), de préférence 10 ppm à 50 %, ou plus particulièrement 1 000 ppm à 10 % de cet agent réducteur sur le catalyseur.

b) on élève la température du catalyseur ainsi imprégné à une température comprise entre 50 et 250 °C (de préférence 80-180 et plus particulièrement 90-150 °C) et sous une pression d'1 à 10 bars (de préférence 1,2 à 5 bars et plus particulièrement 2 à 4 bars, par exemple 3,5 bars), de façon à provoquer un craquage ou une décomposition du composé agent réducteur. Ce craquage ou cette décomposition se traduit par la formation, essentiellement, d'oxyde de carbone qui va provoquer la réduction du catalyseur et provoquer la distribution convenable de la phase active sur le catalyseur. Ce craquage ou décomposition peut provoquer également la formation de vapeur d'eau.

Eventuellement au cours d'une 3ème étape, on élimine du catalyseur en atmosphère inerte, le solvant d'imprégnation et l'eau éventuellement formée à l'étape (b) en atmosphère inerte, comme par exemple l'azote, l'argon ou la vapeur d'eau.

Le solvant d'imprégnation est tout solvant organique dans lequel le composé réducteur est soluble.

Le solvant organique est une essence de type "white spirit" bouillant entre environ 150 et 250°C et renfermant généralement 14 à 22% d'hydrocarbures aromatiques, par exemple 17%, en volume.

On cite ci-dessous quelques exemples de composés agents réducteurs :

A titre d'aldéhydes, on citera par exemple, l'éthanol, le propanal, le butanal, l'éthyl-2 butanal, etc...

A titre de cétones, on peut citer par exemple, l'acétone, la butanone-2, la méthyl-3 butanone-2, la pentanone-2, la pentanone-3, l'hexanone-2, etc...

On peut utiliser des aldéhydes ou des cétones insaturés. On citera à titre d'exemples le buténal-2, l'hexénal-2, la pentène-3 one-2, la pentène-1 diméthyl-5,5 phényl-1 one-3, l'heptène-3 one-2, l'heptène-5 one-2 méthyl-6.

Comme polycétones, on peut utiliser par exemple, la butanedione-2,3 (diméthylglyoxal) ; le pentadione-2,3 ; la pentadione-2,4 (acetylacétone) ; la diméthyl-3,3 pentadione-2,4 ; l'éthyl-3, pendadione-2,4 ; l'hexanédione-2,5 ; etc...

A titre d'éther, on citera par exemple :

le diméthyl éther, le diéthyl éther, le méthyl éthyl éther et le méthyl butyl éther, etc...

A titre d'esters, on citera par exemple, ceux qui correspondent aux aldéhydes, cétones nommés ci-dessus. On peut citer les esters de l'acide lactique ou de l'acide citrique, de l'acide formique et de l'acide propionique. On préfère les esters de l'acide formique, par exemple l'ester méthylique de l'acide formique, l'ester éthylique de l'acide formique et également les esters de l'acide propionique et de l'acide acétique.

De préférence, le procédé de la présente invention est effectué "ex-situ". Le catalyseur réduit par des méthodes ne présentant aucun danger (manipulations d'hydrogène supprimées) est alors livré au raffineur complètement prêt à l'emploi, le libérant ainsi d'opérations délicates et contraignantes comme il a été expliqué plus haut. Il est ainsi possible qu'un raffineur fasse sous-traiter l'opération de réduction de ses catalyseurs, même éventuellement ses catalyseurs de reformage catalytique s'il l'estime utile.

Précisons encore que les catalyseurs mis en oeuvre dans le procédé, sont choisis parmi les métaux du groupe VIII de la classification périodique des éléments, tels que, par exemple, nickel, cobalt, platine ou palladium ou parmi les métaux du groupe Ib tels que, par exemple, le cuivre ou l'argent ou l'or.

On utilise de préférence souvent le nickel ou le palladium ou le cuivre. Ces catalyseurs peuvent être déposés sur des supports inertes (tels qu'alumines ou silices) ou zéolitiques. Dans le cas de supports zéolitiques, le procédé selon l'invention permet également de conserver les propriétés structurales et chimiques de la zéolite.

## EXEMPLE 1 :

Dans un premier test, on prépare des agglomérés d'alumine de la manière suivante : on agglomère au drageoir de l'alumine humide pour la transformer en billes de 2 à 6 mm de diamètre. On traite ces billes par l'eau à 190 °C pendant 6 heures, puis on les calcine à 800 °C pendant 4 heures. On imprègne les billes par une solution aqueuse à 5 % en poids de nitrate de palladium, en quantité suffisante pour déposer 1 % en poids de palladium par rapport à l'alumine sèche.

On sèche, calcine à 450 °C pendant 2 heures, puis conformément aux techniques conventionnelles, on réduit le catalyseur par un courant d'hydrogène à 100 °C pendant 2 heures. On obtient un catalyseur A.

Le catalyseur obtenu présente les caractéristiques suivantes :

|  | Surface ($m^2/g$) | Volume poreux ($cm^3/g$) |
|---|---|---|
| catalyseur A | 60 | 0,58 |

Dans un deuxième test, on prépare un catalyseur comme dans le premier test. La seule différence consiste à réduire le catalyseur, non pas à l'aide d'hydrogène à 100 °C mais à l'aide d'une solution aqueuse d'acide formique conformément EP-A-303525 : on imprègne le catalyseur par cette solution, à 20 °C, sous pression atmosphérique, de façon à ce que le catalyseur renferme 2 % en poids d'acide formique. Puis on élève à 120 °C la température du catalyseur sous une pression de 3 bars et on maintient 2 heures ces conditions opératoires. Puis on sèche le catalyseur. On obtient un catalyseur A1 qui présente les mêmes caractéristiques que le catalyseur A. Dans un troisième test conforme à l'invention on prépare le catalyseur comme dans le premier test, la seule différence consistant à réduire le catalyseur non pas à l'aide d'hydrogène à 100 °C ni à l'aide d'une solution aqueuse d'acide formique mais à l'aide de formiate de méthyle en solution dans du white spirit. On imprègne le catalyseur par cette solution, à 20 °C, sous pression atmosphérique, de façon à ce que le catalyseur renferme 2 % en poids de formiate de méthyle (poids exprimé en acide formique). Puis on élève à 120 °C la température du catalyseur pendant 2 heures. On sèche le catalyseur sous azote. On obtient le catalyseur A2 qui présente également les mêmes caractéristiques que le catalyseur A.

On utilise les trois catalyseurs A, A1 et A2 pour hydrogéner une coupe $C_4$ à 15 °C, sous 15 kg/cm² de pression totale, avec un rapport molaire $H_2$/impuretés de 3 et un débit horaire de 25 volumes liquides par volume de catalyseur.

La coupe $C_4$ renfermait 5 % d'hydrocarbures saturés, 5 % d'hydrocarbures mono-oléfiniques, 43,5 % de butadiène - 1-3 et 0,5 % d'hydrocarbures acétyléniques (méthylacétylène, éthylacétylène et vinylacétylène). On a obtenu les pourcentages relatifs suivants d'hydrogénation :

| Catalyseurs | | | |
|---|---|---|---|
|  | A | A1 | A2 (selon l'invention) |
| Conversion % mol. | | | |
| Mono-oléfines | 0 | 0 | 0 |
| Butadiène | 1 | 1 | 0,9 |
| Acétyléniques | 98,0 | 98,0 | 98,2 |

On constate donc que le catalyseur de l'invention A1 est aussi actif et aussi sélectif que le catalyseur A mais que le catalyseur A2, par une meilleure conservation de ses qualités permet d'améliorer la conversion.

EXEMPLE 2 :

Dans un premier test, on prépare un catalyseur B en imprégnant, par une solution nitrique de nitrate de palladium, un support d'alumine, en billes de 2 mm de diamètre, d'une surface spécifique égale à 57 $m^2/g$ et d'un volume poreux total égal à 0,6 $cm^3/g$, de manière à obtenir sur le catalyseur fini, une teneur de 0,3 % en poids de palladium. Après imprégnation, le catalyseur est séché à 120 °C à l'étuve puis calciné à 900 °C pendant deux heures dans un courant d'air.

Un échantillon du catalyseur B est réduit par passage d'hydrogène à 100 °C pendant deux heures. Le catalyseur est chargé dans un réacteur tubulaire et réduit in situ par passage d'hydrogène à 100 °C pendant deux heures en propyne de purifier du propylène par hydrogénation notamment du propyne et du propadiène qu'il contient.

On opère dans les conditions opératoires suivantes :
- vitesse spatiale (VVH liquide) = 20
- pression = 20 bars
- température = 20 °C
- $H_2$/propyne + propadiène = 1,2 mole/mole.

Les analyses de la charge et du produit obtenu sont rassemblées dans le tableau suivant :

| Composé | Charge % poids | Produit % poids |
|---|---|---|
| Propane | 4,0 | 6,2 |
| Propylène | 91,5 | 93,65 |
| Propyne | 2,7 | indétectable |
| Propadiène | 1,8 | environ 8 ppm |
| Oligomères | – | 0,15 |
| | === | ==== |
| TOTAL................. | 100,00 | 100,00 |

Dans un deuxième test, on opère comme dans le premier test. Toutefois le catalyseur n'est pas réduit à l'hydrogène à 100 °C pendant deux heures ; ici le catalyseur est réduit conformément à la technique de EP-A-303525 de la façon suivante : Le catalyseur est traité par une solution aqueuse d'acide propionique ; on effectue l'imprégnation à 20 °C sous pression atmosphérique, de façon à ce que le catalyseur renferme 2 % en poids d'acide propionique. On élève à 120 °C la température du catalyseur sous une pression de 3,5 bars et on maintient ces conditions opératoires pendant deux heures. Puis on sèche le catalyseur B1 obtenu et on l'utilise comme le premier test.

Dans un troisième test, on prépare un catalyseur B2 comme dans le premier test mais le catalyseur est ensuite réduit à l'aide de propionate de méthyle dans du white spirit. On effectue l'imprégnation à 20 °C sous pression atmosphérique de façon à ce que le catalyseur renferme 2 % en poids de propionate de méthyle (poids exprimé en acide propionique). On élève à 120 °C la température du catalyseur et on maintient ces conditions opératoires pendant deux heures. Puis on sèche le catalyseur B2 obtenu (sous azote) et on l'utilise comme pour les deux tests précédents :

Les produits obtenus au cours de ces deux tests ont les compositions suivantes :

| | Catalyseur B1 % poids | Catalyseur B2 % poids |
|---|---|---|
| - propane | 6,2 | 5,7 |
| - propylène | 93,65 | 94,15 |
| - propyne | indétectable | indétectable |
| - propadiène | environ 8 ppm | indétectable |
| - oligomères | 0,15 | 0,15 |
| | ====== | ====== |
| - TOTAL.......... | 100,00 | 100,00 |

On observe donc, d'une part, les mêmes résultats avec B1 qu'avec le catalyseur réduit conventionnellement à l'hydrogène et une amélioration de la sélectivité avec B2.

## EXEMPLE 3

La charge que l'on traite provient d'un steam-cracking (craquage à la vapeur) de gas-oil et a les caractéristiques suivantes :

| Caractéristiques | | Méthode | Résultats |
|---|---|---|---|
| Masse volumique à 15 °C | | NF T 60-101 | 0,859 |
| Distillation ASTM °C | | NF M 07-002 | |
| | Point initial | | 55 |
| | 50 % | | 111 |
| | Point final | | 180 |
| Soufre total (ppm en poids) | | NF M 07-014 | 1500 |
| Soufre H2S (ppm en poids) | | | < 2 |
| Soufre mercaptan (ppm en poids) | | NF M 07-031 | 70 |
| Corrosion lame de cuivre | | NF M 07-015 | 1b |
| Essai au plombite (Docteur Test) | | NF M 07-005 | positif |
| Indice de brome (g Br/100g) | | NF M 07-017 | 52 |
| Indice d'anhydride maléique (MAV) mg anhydride maléique/g | | UOP 326-58 | 97 |
| Période d'induction (mn) avec 20 ppm en poids d'antioxydant (NN'-di-sec. Butyl-paraphenylene diamine) | | NF M 07-012 | 20 |
| Indice d'octane "Recherche" (0,05 % en poids de plomb tétraéthyle) | | NF M07-012 | 98 |

On fait passer cette essence, en mélange avec de l'hydrogène, dans un réacteur rempli exclusivement d'un catalyseur constitué par 10 % poids de nickel déposé de manière conventionnelle à partir de nitrate de nickel sur support d'alumine de 70 m2/g de surface spécifique. Avant l'emploi, ce catalyseur C est calciné à 450 °C pendant 2 heures puis réduit par l'hydrogène à 400 °C pendant 15 heures.

Dans une autre manipulation, on opère comme avec le catalyseur précédent. Toutefois, le catalyseur n'est pas réduit à l'hydrogène à 400 °C pendant 15 heures, ici, le catalyseur est réduit conformément à la technique d'EP-A 303525 de la façon suivante : le catalyseur est traité par une solution aqueuse d'acide propionique; on effectue l'imprégnation à 20 °C sous pression atmosphérique de façon à ce que le catalyseur renferme 2 % en poids d'acide propionique. On élève à 120 °C la température du catalyseur sous une pression de 3,5 bars et on maintient ces conditions opératoires pendant deux heures. Puis on sèche le catalyseur C1 obtenu.

Dans un troisième essai, on opère comme précédemment mais le catalyseur est réduit par du propionate d'éthyle en solution dans un white spirit. On effectue l'imprégnation à 20 °C sous pression atmosphérique de façon à ce que le catalyseur renferme 2 % en poids de propionate d'éthyle (exprimé en poids d'acide propionique). On élève à 120 °C la température du catalyseur et on maintient ces conditions opératoires pendant deux heures et on sèche le catalyseur obtenu C2 (sous azote).

On utilise les trois catalyseurs C, C1 et C2 pour traiter la charge de steam cracking (craquage à la vapeur) en vue d'abaisser les teneurs en composés générateurs de gommes (abaissement de la MAV) et du soufre indésirable (mercaptans) sans hydrogénation excessive des mono-oléfines (caractérisées par l'indice de brome).

Les conditions opératoires sont les suivantes :
- vitesse spatiale vol/vol/h          : 2
- température moyenne °C          : 130
- pression totale (bars)          : 40
- H$_2$/charge (moles)          : 0,5

Le produit obtenu après 100 heures de fonctionnement a les caractéristiques principales suivantes :

|  | Catalyseur C | Catalyseur C1 | Catalyseur C2 |
|---|---|---|---|
| Indice de brome gBr/100 g : | 43 | 43 | 42 |
| MAV (indice d'anhydride maléïque exprimé en mg d'anhydride maléïque/g) : | 10 | 10 | 8 |
| (Période d'induction (mn)) avec 20 ppm en poids d'antioxydant | 480 | 480 | 480 |
| Soufre mercaptan (ppm en poids): | 6 | 6 | 3 |
| Soufre total (ppm en poids) : | 1500 | 1500 | 1500 |
| Corrosion lame de cuivre | 1a | 1a | 1a |
| Essai au plombite | négatif | négatif | négatif |
| Indice d'octane "Recherche" : | 98 | 98 | 98 |

On observe que le produit est adouci (par chacun des catalyseurs C, C1 et C2) par rapport à la charge et répond bien aux spécifications demandées pour les carburants auto habituels. Le catalyseur C2 est légèrement plus performant.

EXEMPLE 4 :

Cet exemple qui illustre l'application de l'invention à l'isomérisation des n-paraffines concerne ici l'isomérisation du n-hexane.

Les performances sont exprimées en terme de conversion du n-hexane, de sélectivité en isomérisation et de sélectivité en craquage et définies comme suit :

```
Conversion =

    (Masse de n-hexane entrée-masse de n-hexane sortie) x 100

                    Masse de n-hexane entrée


Sélectivité    ]      (Masse des isomères) x 100

               = ----------------------------------

Isomérisation ]      (Masse des produits de la réaction)


    Sélectivité craquage = 100-sélectivité isomérisation.
```

On prépare un catalyseur D à base d'une mordénite à larges pores sous forme de poudre référencée Zéo-

Ion 100 Na de la société NORTON.

50 g de cette poudre sont portés à reflux 2 heures dans une solution de nitrate d'ammonium. Cet échange est recommencé 3 fois. Après le dernier échange le produit est lavé à l'eau pendant 20 mn à 20 °C, filtré et calciné en atmosphère confinée (self steaming) à 600 °C pendant 2 heures. Ce traitement thermique est suivi d'une attaque acide avec de l'acide nitrique 1,3N. Le solide est porté à reflux dans une solution aqueuse d'acide nitrique à 100 °C pendant 2 heures, puis lavé à l'eau.

Le rapport atomique Si/Al de la mordénite obtenue est égal à 12, le volume de la maille à 2,752 nm$^3$, et le taux de sodium à 95 ppm, et sa capacité d'adsorption de benzène est de 9,7 % poids par rapport au poids de solide sec. Le produit obtenu est ensuite mis en forme par malaxage avec un gel d'alumine préalablement peptisé.

La matrice aluminique utilisée a été obtenue par incorporation d'oxyde de titane à un gel d'alumine par mélange mécanique. Cette matrice aluminique contient 4000 ppm en poids d'oxyde de titane.

Le mélange mordénite-matrice contenant 25 % en poids de matrice est forcé au travers d'une filière. Les extrudés de diamètre 1,2 x 10$^{-3}$ m sont ensuite séchés et calcinés.

0,4 % de platine sont ensuite déposés sur le support ainsi préparé par échange cationique à partir de chlorure de platine tétrammine Pt(Nh$_3$)$_4$Cl$_2$ avec du nitrate d'ammonium comme ion compétiteur. Le rapport atomique Si/Al est égal à 12 et le volume de maille à 2,750 nm$^3$. Les extrudés sont ensuite séchés puis calcinés à 500 °C.

Le catalyseur final renferme en poids : 24,84 % d'alumine, 74,69 % de mordénite, 0,4 % de platine et 0,06 % de titane.

Le catalyseur ainsi obtenu est chargé dans une unité catalytique en lit fixe et réduit sous hydrogène à 450 °C. Il est ensuite testé avec une charge de normal hexane dans les conditions suivantes : température 250 °C, pression 30 bars (3 MPa), poids de n-hexane par unité de poids de mordénite et par heure : 2, rapport molaire hydrogène sur normal hexane : 2. Les performances obtenues avec le catalyseur D sont indiquées dans le tableau I.

Dans les deux autres essais, on reprend le catalyseur D mais sans les réduire à l'hydrogène à 450 °C préalablement à leur emploi. Un échantillon D1 est traité par une solution aqueuse d'acide formique conformément à la technique d'EP-A-303525. L'imprégnation est faite à 20 °C sous pression atmosphérique de façon à ce que le catalyseur renferme 2 % en poids d'acide formique. On élève à 115 °C la température du catalyseur et on maintient ces conditions opératoires pendant deux heures. Puis on sèche le catalyseur D1 obtenu. Un deuxième échantillon D2 de catalyseur est traité conformément à l'invention par du formiate de méthyle en solution dans du white spirit. L'imprégnation est faite à 20 °C sous pression atmosphérique de façon à ce que le catalyseur renferme 2 % en poids de formiate de méthyle (poids exprimé ici en acide formique). On élève à 115 °C la température du catalyseur et on maintient ces conditions opératoires pendant deux heures. Puis on sèche le catalyseur D2 ainsi obtenu sous atmosphère d'azote.

Les performances obtenues avec D1 et D2, qui sont réduites à 300 °C sous hydrogène dans l'unité et non à 450 °C comme pour le catalyseur D, sont également indiquées dans le tableau I. D1 donne les mêmes résultats que D ce qui montre l'avantage de pouvoir effectuer la réduction très simplifiée de EP-A-303525 par rapport aux techniques de l'art antérieur. Mais lorsque cette réduction simplifiée est effectuée exclusivement en phase organique et non aqueuse les qualités du catalyseur formé ont également une légère action bénéfique sur la conversion et les sélectivités.

TABLEAU 1

| CATALYSEUR | CONVERSION % | SELECTIVITE ISOMERISATION % | SELECTIVITE CRAQUAGE % |
|---|---|---|---|
| D | 57,0 | 96,7 | 3,3 |
| D1 | 57,0 | 96,7 | 3,1 |
| D2 | 60,0 | 96,3 | 3,7 |

**Revendications**

1.  Procédé de réduction d'un catalyseur de raffinage renfermant un support et une phase active à base d'au moins un métal du groupe VIII ou du groupe Ib de la classification périodique des éléments caractérisé en ce que, avant la mise en oeuvre de ce catalyseur dans une zone de réaction de raffinage, on réalise un traitement du catalyseur "in-situ", c'est-à-dire dans la zone de réaction, ou "ex-situ" c'est-à-dire en dehors de la zone de réaction, le dit traitement consistant :

    (a) à imprégner le catalyseur entre 0 et 50 °C, par un solvant organique qui est le white spirit et qui renferme au moins un agent réducteur choisi dans le groupe constitué par les aldéhydes renfermant 2 à 14 atomes de carbone par molécule (et de préférence 3 à 12 atomes de carbone), les cétones ou polycétones renfermant 3 à 18 (et de préférence 3 à 12) atomes de carbone par molécule, les éthers renfermant 2 à 14 (de préférence 3 à 12) atomes de carbone par molécule, et les esters des acides organiques ou polyacides renfermant 1 à 14 (et de préférence 1 à 12 atomes de carbone par molécule), de façon à introduire 10 ppm à 100 % (en poids), de cet agent réducteur sur le catalyseur.

    (b) à élever la température du catalyseur ainsi imprégné à une température comprise entre 50 et 250 °C et sous une pression de 1 à 10 bars.

2.  Procédé selon la revendication 1 dans lequel en outre à l'issue du traitement on sèche le catalyseur pour éliminer le solvant d'imprégnation.

3.  Procédé selon la revendication 1 dans lequel à l'étape (a), la température d'imprégnation du composé agent réducteur est comprise entre 10 et 30 °C.

4.  Procédé selon la revendication 1 dans lequel à l'étape (a), on introduit 10 ppm à 50 % en poids du dit composé agent réducteur sur le catalyseur.

5.  Procédé selon l'une des revendications 1 à 4 dans lequel au cours de l'étape (b) la température du catalyseur imprégné est élevée à une valeur comprise entre 80 et 180 °C.

6.  Procédé selon la revendication 5 dans lequel la température est comprise entre 90 et 150 °C.

7.  Procédé selon l'une des revendications 1 à 5 dans lequel on opère "ex-situ" c'est-à-dire, en dehors de la zone de réaction de raffinage.

8.  Procédé selon l'une des revendications 1 à 7 dans lequel le composé agent réducteur est un ester d'un acide organique ou d'un polyacide organique.

9.  Procédé selon l'une des revendications 1 à 8 dans lequel l'agent réducteur est un ester de l'acide formique ou de l'acide propionique ou de l'acide acétique.

10. Procédé selon la revendication 9 dans lequel l'agent réducteur est le formiate de méthyle ou d'éthyle en solution dans un white spirit.

**Office européen des brevets**

# RAPPORT DE RECHERCHE EUROPEENNE

Numero de la demande

EP   92 40 0846

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | EP-A-0 303 525 (EUROCAT)<br>* page 3, ligne 1 - ligne 2; revendications 1-15 * | 1-10 | B01J37/16 |
| | ----- | | |

|  |
|---|
| **DOMAINES TECHNIQUES RECHERCHES (Int. Cl.5 )** |
| B01J |

Le présent rapport a été établi pour toutes les revendications

| Lieu de la recherche | Date d'achèvement de la recherche | Examinateur |
|---|---|---|
| LA HAYE | 08 MAI 1992 | MICHIELS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)